# EUROPÄISCHE PATENTANMELDUNG

(11) **EP 0 547 375 A2**
(43) Veröffentlichungstag der Anmeldung: **23.06.1993**
(21) Anmeldenummer: 92119413.0
(22) Anmeldetag: 13.11.1992
(51) Int. Cl.: B60J 7/00

(54) **Fahrzeug-Schiebehebedach**

(30) Priorität: 14.12.1991 DE 4141283
(71) Anmelder: WEBASTO KAROSSERIESYSTEME GmbH, D-82131 Stockdorf (DE)
(72) Erfinder: Kittelmann, Ralf, W-8000 München 60 (DE); Jardin, Hans, W-8084 Inning (DE); Färber, Manfred, W-8121 Wielenbach (DE); Wienchol, Otto, W-8023 Pullach (DE)

(57) **Zusammenfassung**

Die Erfindung gibt ein Fahrzeug-Schiebehebedach an, welches einen starren Deckel, vorzugsweise einen lichtdurchlässigen Deckel hat, mittels welchem eine Dachöffnung in einer festen Dachfläche eines Fahrzeugs geöffnet und geschlossen werden kann. Der Deckel läßt sich ferner in eine Belüftungsstellung, vorzugsweise eine Ausstellstellung, bringen. Ferner ist ein Himmel vorgesehen, welcher ein vorderes und ein hinteres Himmelteil umfaßt. Dieser Himmel ist unabhängig von der Stellung des Deckels insbesondere bei einem lichtdurchlässigen Deckel beweglich. Wenn der Deckel seine Belüftungsstellung einnimmt, ist zwischen den Himmelteilen ein horizontaler Lüftungsspalt freilegbar. Über einen Steuerhebel, welcher an einem Ende beispielsweise bei der Ausstellbewegung des Deckels beaufschlagt wird, wird das hintere Himmelteil von dem vorderen Himmelteil abgerückt, welches über eine Verriegelungseinrichtung festgestellt ist. Mit Hilfe einer Handentriegelung kann der Himmel auch vollständig geöffnet werden, wobei dann die beiden Himmelteile eine Bewegungsverbundeinheit bilden, da sie mittels einer Feder in Anlageberührung zueinander vorbelastet sind.

## Beschreibung

Die Erfindung bezieht sich auf ein Fahrzeug-Schiebehebedach mit einem starren Deckel zum Verschließen und wenigstens teilweise Freigeben einer von einem Dachrahmen begrenzten Dachöffnung in einer festen Dachfläche, mit einer Verstelleinrichtung für die Belüftungsstellung des Deckels und mit einem wenigstens in Fahrzeuglängsrichtung ein vorderes und hinteres Himmelteil aufweisenden Himmel, welcher unabhängig von der Deckelstellung bewegbar ist.

Aus DE-32 42 097 C2 ist ein Fahrzeugdach mit einer Sonnenblende bekannt. Die Sonnenblende ist unter dem Deckel angeordnet und weist wenigstens einen Lichtdurchlaß auf. Diese Sonnenblende arbeitet mit einem Verschlußteil zum wahlweisen Öffnen und Verschließen des Lichtdurchlasses zusammen, das parallel zur Sonnenblende verschiebbar ist. Die als Schiebehimmel dienende Sonnenblende ist wie das zugeordnete Verschlußteil unabhängig von der Deckelstellung verschiebbar, so daß ein jeweils gewünschter Lichtdurchlaßspalt freilegbar ist.

Aus DE-PS 24 35 551 ist ein Kraftfahrzeugdach mit einem starren Schiebedeckel bekannt, wobei ein bei geschlossenem Deckel die ganze Unterseite des Daches abdeckender Dachhimmel vorgesehen ist. Dieser Dachhimmel umfaßt in Fahrzeuglängsrichtung gesehen ein vorderes und hinteres Himmelteil, welche gesondert relativ zueinander oder als eine bewegungsverbundene Einheit bewegbar sind.

Aus DE 38 25 192 A1 ist eine Verstelleinrichtung an einem Fahrzeug-Schiebehimmel bekannt, welche derart ausgelegt ist, daß beim Ausstellen des Deckels der Schiebehimmel von der Verstelleinrichtung zwangsweise ein Stück zurückverlagert wird, so daß sich ein Dachlüftungsspalt bildet.

Aus DE 32 48 413 A1 schließlich ist ein Hebe- und Spoilerdach für Fahrzeuge bekannt, wobei unterhalb des Deckels ein zurückschiebbarer beweglicher Himmel angeordnet ist.

Aus DE 39 30 755 A1 ist ein Lüfterdach für Fahrezeuge bekannt, bei der dem Deckel eine vordere Höhenverstelleinrichtung zugeordnet ist, mittels der ausgehend von der Schließstellung der Deckel um eine nahe seiner Hinterkante liegenden Schwenkachse in eine Lüfterstellung verschwenkbar ist, in welcher die Deckelvorderkante unterhalb der Dachebene liegt, während die Deckelhinterkante etwa in Höhe der Dachhaut gehalten wird. Bei diesem Lüfterdach wird die Vorderkante des Deckels in die Belüftungsstellung schräg nach unten weisend abgesenkt.

Bei allen den vorstehend erläuterten Auslegungsformen von Fahrzeug-Schiebehebedächern ergeben sich in Verbindung mit dem zugeordneten Himmel einerseits Schwierigkeiten im Hinblick auf die Bauhöhe, wenn der Himmel bei der Verstellbewegung mitgenommen werden und einen Lüftungsspalt freilegen soll. Dies ist insbesondere darauf zurückzuführen, daß die Verstelleinrichtung und der Himmel in unterschiedlichen Höhenlagen zueinander angeordnet sind. Andererseits ergeben sich auch Schwierigkeiten aus dem Grunde, daß der Himmel unabhängig von den Bewegungsweisen des Deckels in Öffen- und Schließrichtung bewegbar sein soll. Hierzu sind meist komplizierte und viele Einzelteile umfassende, umsteuerbare Einrichtungen erforderlich, welche zu einer verstärkten Störungsanfälligkeit führen und hierdurch die Betriebszulässigkeit beeinträchtigen.

Der Erfindung liegt die Aufgabe zugrunde, ein Fahrzeug-Schiebehebedach mit einem unabhängig von der Deckelbewegung desselben bewegbaren Himmel der gattungsgemäßen Art bereitzustellen, bei dem auf konstruktiv einfache und betriebszuverlässige Weise bei der Belüftungsstellbewegung des Deckels ein Lüftungsspalt auch im Himmel zur Optimierung der Be- und Entlüftung des Fahrzeuginnenraums bereitgestellt wird.

Nach der Erfindung zeichnet sich hierzu ein Fahrzeug-Schiebehebedach mit einem starren Deckel zum Verschließen und wenigstens teilweisen Freigeben einer von einem Dachrahmen begrenzten Dachöffnung in einer festen Dachfläche mit einer Verstelleinrichtung für die Belüftungsstellung des Deckels und einem wenigstens in Fahrzeuglängsrichtung ein vorderes und ein hinteres Himmelteil aufweisenden Himmel, welcher unabhängig von der Deckelstellung bewegbar ist, dadurch aus, daß bei der Belüftungsstellbewegung des Deckels zwischen den Himmelteilen ein horizontaler Lüftungsspalt freilegbar ist.

Beim erfindungsgemäßen Fahrzeug-Schiebehebedach wird bei der Belüftungsstellbewegung des Deckels zwischen den Himmelteilen ein horizontaler Lüftungsspalt freigelegt, so daß man in zuverlässiger Weise auch in der Belüftungsstellung des Deckels einen Lüftungsspalt zwischen den Himmelteilen des Himmels hat. Hierdurch wird insbesondere der zum Fahrzeuginnenraum offene Lüftungsspalt etwa in der Mitte der Längserstreckung des Deckels freigelegt, so daß man eine optimierte Be- und Entlüftung des Fahrzeuginnenraums in der Belüftungsstellung des Deckels hat. Die beiden Himmelteile sind somit einerseits relativ zueinander zur Freilegung des Lüftungsspaltes bewegbar, aber auch gekoppelt als Bewegungseinheit bewegbar, wenn die beiden Himmelteile in Anlageberührung gegeneinander sind.

Vorzugsweise ist das hintere Himmelteil in Anlage gegen das vordere Himmelteil federbelastet, und ein rahmenfest drehbar gelagerter Steuerhebel ist derart angeordnet, daß er bei der Belüftungsstellbewegung des Deckels beaufschlagt wird und das hintere Himmelteil vom vorderen Himmelteil entgegen der Federbelastung zum Freigeben des Lüftungsspaltes in Längsrichtung wegbewegt. Hierbei wird die Bewegungseinheit der beiden Himmelteile mit Hilfe der Federvorbelastung erreicht. Bei der so gebildeten Bewegungseinheit läßt sich dann der Himmel unabhängig von der Stellung des Deckels bewegen, d.h. öffnen oder schließen, falls dies erforderlich sein sollte, wie bei einem lichtdurchlässigen Deckel. Da zudem der Steuerhebel eine Drehbewegung um eine rahmenfeste Drehachse, gesteuert durch den Bewegungsweg des bei der Verstellbewegung des Deckels bewegenden Teils ausführt, läßt sich durch die entsprechende Wahl der Hebelverhältnisse ein relativ großer Lüftungsspalt zwischen den beiden Himmelteilen freilegen. Durch diese Bewegungskopplung ändert sich ferner die Größe des freigelegten Lüfungsspalts unter unmittelbarer Zuordnung zu der Verstellhöhe des Deckels in seiner Belüftungsstellung. Somit läßt sich an der Größe des freigelegten Lüftungsspalts der Öffnungszustand des Deckels ablesen. Dies ist insbesondere bei einem lichtdurchlässigen Deckel, wie einem Glasdeckel, von Vorteil, da man nämlich dann an der Größe des freigelegten Lüftungsspalts unmittelbar die Deckelstellung erkennen kann.

Vorzugsweise ist der Steuerhebel für die Bewegungskopplung der Himmelteile im wesentlichen horizontal, so daß man eine möglichst geringe Bauhöhe bei dem erfindungsgemäßen Fahrzeug-Schiebehebedach erhält.

Vorzugsweise ist zur Beaufschlagung des Steuerhebels bei der Belüftungsstellbewegung dieser ein Ende des Steuerhebels zugeordnet, während sein anderes Ende das hintere Himmelteil mitnimmt. Durch die entsprechende Wahl der Hebelübersetzungsverhältnisse, läßt sich trotz einer relativ günstigen Flachbauweise des erfindungsgemäßen Fahrzeug-Schiebehebedachs ein möglichst großer Lüftungsspalt in der Belüftungsstellung des Deckels freilegen.

Um bei der Bewegung des hinteren Himmelteils entgegen der Federvorbelastung ein Mitziehen des vorderen Himmelteils beim Bewegen des Deckels in seine Belüftungsstellung zu vermeiden, wird das vordere Himmelteil mittels einer lösbaren Verriegelungseinrichtung festgestellt, bevor der Steuerhebel von dem sich bei der Belüftungsstelbewegung bewegenden Teil der Mechanik des Fahrzeug-Schiebehebedachs beaufschlagt wird.

Um ein Öffnen des Himmels insgesamt auch in der Belüftungsstellung des Deckels zu erreichen, ist die Verriegelungseinrichtung zum von der Deckelstellung unabhängigen Zurückschieben des Himmels vorzugsweise von Hand entriegelbar. Zur Entriegelung kann man ein Betätigungselement im vorderen Himmelteil anordnen, welches beispielsweise vom Fahrer her leicht zugänglich ist. Da das vordere Himmelteil zur erleichterten Betätigung meist eine Griffschale besitzt, kann das Betätigungselement geschützt in dieser Griffschale im vorderen Himmelteil angeordnet werden. Hierdurch läßt sich die Verletzungsgefahr verringern, da kein vorstehendes Teil im Dachbereich des Fahrzeugs vorhanden ist.

Vorzugsweise ist das Fahrzeug-Schiebehebedach nach der Erfindung derart ausgelegt, daß bei der Längsverschiebebewegung des Deckels die Verriegelungseinrichtung automatisch entriegelt wird. Wenn nämlich der Deckel zur Freigabe der vom Dachrahmen begrenzten Dachfläche eine Längsverschiebebewegung unter die feste Dachfläche abgesenkt ausführt, werden auf diese Weise die zu einer Bewegungsverbundeinheit verbundenen Himmelteile des Himmels automatisch mitgenommen. Um dies zu ermöglichen, wird gemäß dieser bevorzugten Ausführungsform die Verriegelungseinrichtung automatisch entriegelt, so daß das vordere Himmelteil ungehindert verschoben werden kann.

Vorzugsweise ist die Verriegelungseinrichtung derart ausgelegt, daß sie mit dem Dachrahmen zusammenarbeitet, und daß die Verriegelungseinrichtung ein relativ zum vorderen Himmelteil längsverschiebbares Verriegelungselement aufweist. Somit hat auch das Verriegelungselement eine im wesentlichen horizontale Erstreckung, um eine möglichst geringe Bauhöhe des Fahrzeug-Schiebehebedachs zu erreichen. Zur Feststellung des vorderen Himmelteils rastet das Verriegelungselement vorzugsweise in eine Ausnehmung im Dachrahmen ein.

Eine bevorzugte Ausführungsform des Fahrzeug-Schiebehebedachs zeichnet sich dadurch aus, daß bei einer Verstelleinrichtung mit einem Hubwinkel an demselben ein Zapfen angebracht ist, welcher in die Bewegungsbahn des Steuerhebels zur Beaufschlagung desselben ragt. Dieser Hubwinkel stellt hierbei das sich bei der Verstellbewegung des Deckels in Längsrichtung bewegende Teil der Mechanik des Fahrzeug-Schiebehebedachs dar, und durch den dort vorgesehenen Zapfen wird dann der Steuerhebel unmittelbar bei der Längsbewegung des Hubwinkels um seine rahmenfeste Drehachse verdreht.

Der Zapfen an dem Hubwinkel hat aber noch eine weitere Funktion, da er nämlich bei der Längsverschiebebewegung des Deckels die Verriegelungseinrichtung für das vordere Himmelteil zwangsläufig entriegelt, so daß dieser Zapfen beim erfindungsgemäßen Fahrzeug-Schiebehebedach eine Doppelfunktion hat, um möglichst wenige Einzelteile zu haben.

Vorzugsweise hat das Fahrzeug-Schiebehebedach an dem Steuerhebelende, das mit dem hinteren Himmelteil zusammenarbeitet, einen weiteren Zapfen, welcher bei der Beaufschlagung des anderen Steuerhebelendes im Zusammenwirken mit der Verstelleinrichtung mit einer Mitnahmeeinrichtung am hinteren Himmelteil zusammenarbeitet. Über diese Mitnahmeeinrichtung wird somit das hintere Himmelteil unmittelbar durch den Steuerhebel beaufschlagt, so daß das hintere Himmelteil relativ zum vorderen Himmelteil zur Freigabe des Lüftungsspaltes hierdurch bewegt wird.

Vorzugsweise ist die Mitnahmeeinrichtung am hinteren Himmelteil derart angebracht, daß sie in die Bewegungsbahn des Steuerhebels nur ragt, wenn das andere Steuerhebelende durch die Verstelleinrichtung beaufschlagt ist. Durch diese Auslegung wird erreicht, daß der Himmel unter Kopplung der Himmelteile immer dann unabhängig von dem Steuerhebel bewegbar ist, wenn das mit der Verstelleinrichtung zusammenarbeitende Steuerhebelende nicht beaufschlagt ist. Hierdurch lassen sich Betriebsstörungen wirksam vermeiden, und insbesondere läßt sich der Bewegungswiderstand des Himmels zur Erzielung einer Leichtgängigkeit bei seiner Bewegung unabhängig von der Deckelstellung reduzieren.

Um eine möglichst leichtgängige Mitnahme des hinteren Himmelteils bei der Verstellbewegung des Deckels zu erreichen, wird die Mitnahmeeinrichtung am hinteren Himmelteil von einem Gleitstück gebildet, so daß man eine Gleitberührung zwischen dem zugeordneten Steuerhebelende bei der Mitnahme hat.

Vorzugsweise umfaßt die Handentriegelungseinrichtung ein mechanisches Hebelgestänge, welches in die Verriegelungseinrichtung eingreift, so daß man eine direkte Bewegungsübertragung vom Betätigungselement im Bereich des vorderen Himmelteils zu der Verriegelungseinrichtung erhält, die im hinteren Bereich des Himmels angeordnet ist.

Vorzugsweise ist zur Federbelastung des vorderen und hinteren Himmelteils in Anlageberührung gegeneinander eine Zugfeder vorgesehen, welche sich flachbauend zwischen den beiden Himmelteilen anordnen läßt.

Bei dem erfindungsgemäßen Fahrzeug-Schiebehebedach hat man somit zur Zwangsmitnahme des hinteren Himmelteils zum Freilegen eines Lüftungsspalts nur ein bewegliches Teil, welches im wesentlichen horizontal angeordnet ist und um eine rahmenfeste Drehachse drehbar ist. Hierdurch erhält man eine Mitnahmeeinrichtung, welche sehr störungsunempfindlich ist. Auch die ferner noch zur Feststellung des vorderen Himmelteils dienende Verriegelungseinrichtung wird von einem sich in einer Horizontalebene erstreckenden Verriegelungselement gebildet, welches aber lediglich eine Längsverschiebebewegung bezüglich des zugeordneten Himmelteils ausführt, während sowohl die Verriegelungseinrichtung als auch der Steuerhebel von einem gemeinsamen Steuerteil in der entsprechenden Stellung beaufschlagt werden, welches sich sowohl bei der Verstellbewegung als auch bei der Längsverschiebebewegung des Deckels bewegt. Hierdurch erhält man eine äußerst kompakt aufgebaute Einrichtung für die gewünschten Bewegungen des Himmels auch unter Zuordnung der Verstellbewegung des Deckels.

Vorzugsweise ist das Fahrzeug-Schiebehebedach mit einem lichtdurchlässigen Deckel ausgestattet, wobei der Himmel in der Bewegungsverbundeinheit unabhängig von der Deckelstellung längsverschieblich ist.

Bei dem erfindungsgemäßen Fahrzeug-Schiebehebedach kann der Deckel in seiner Belüftungsstellung schräg nach hinten weisend über die feste Dachfläche ausgestellt werden. Andererseits ist auch eine solche Auslegung möglich, daß der Deckel in seiner Belüftungsstellung vorne absenkbar ist, so daß die erfindungsgemäße Himmelauslegung auch bei dieser Bauform eines Fahrzeugdachs zum Einsatz kommen kann.

Die Ausbildungsform des Himmels als Schiebehimmel ist insbesondere für ein Fahrzeugdach mit einem lichtdurchlässigen Deckel bestimmt.

Die Erfindung wird nachstehend anhand einer bevorzugten Ausführungsform unter Bezugnahme auf die beigefügte Zeichnung erläutert. Darin zeigt:
- Fig. 1: eine schematische Draufsicht auf ein Fahrzeug mit einem Fahrzeug-Schiebehebedach nach der Erfindung,
- Fig. 2: eine Schnittansicht längs der Linie II-II in Figur 1, und
- Fig. 3 - 7: Draufsichten auf das Fahrzeug-Schiebehebedach bei abgenommenem Deckel zur Verdeutlichung der Funktionsweise des Steuerhebels im Zusammenwirken mit der Verstelleinrichtung und den Himmelteilen in zugeordneten bevorzugten Stellungen des Deckels und des Himmels.

In den Figuren der Zeichnung sind gleiche oder ähnliche Teile mit denselben Bezugszeichen versehen.

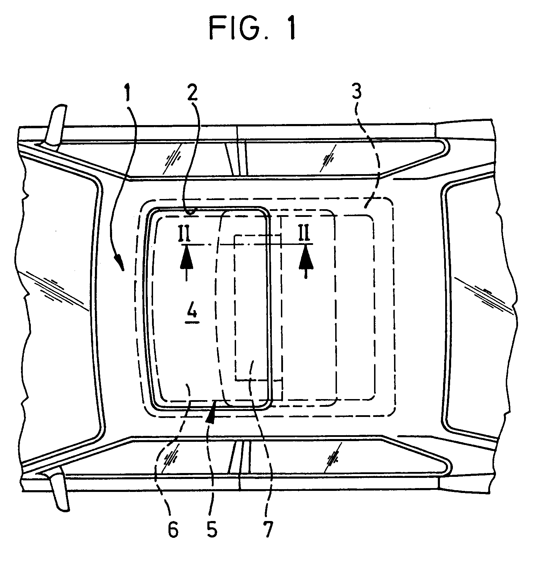

Beim in Figur 1 dargestellten Fahrzeug ist in einer festen Dachfläche eine Dachöffnung 2 vorgesehen, welche von einem die Dach-Öffnung 2 in der festen Dachfläche einfassenden Dachrahmen 3 begrenzt wird. Die Dachöffnung 2 ist mittels eines starren Deckels 4 in durchgezogener Linie gezeigt verschließbar, oder die Dach-Öffnung 2 ist entsprechend der gebrochenen Linie in Figur 1 teilweise freilegbar. Ferner ist dem Fahrzeuginnenraum zugewandt ein insgesamt mit 5 bezeichneter Himmel vorgesehen, welcher ein vorderes Himmelteil 6 und ein hinteres Himmelteil 7 umfaßt.

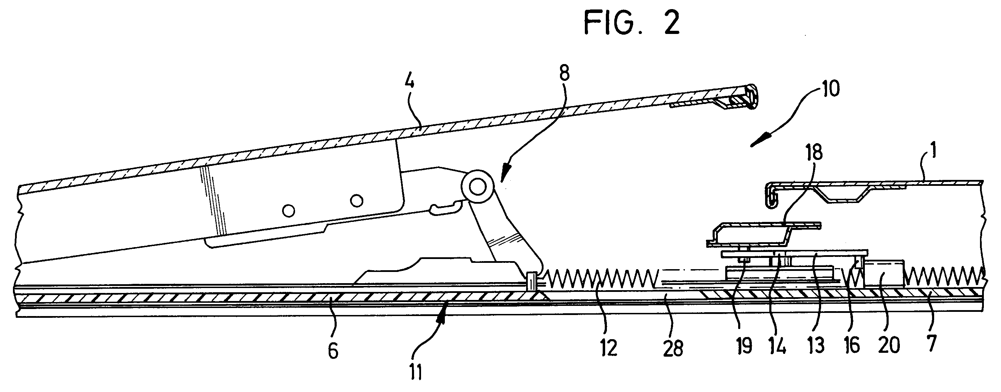

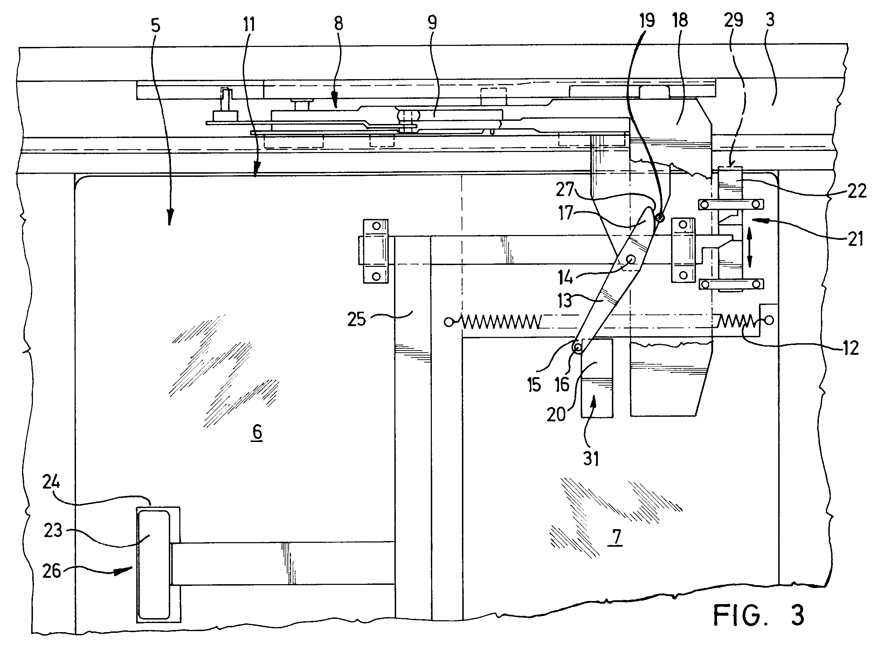

Wie insbesondere aus Figur 2 zu ersehen ist, umfaßt die Bewegungsmechanik für den Deckel 4 eine Verstelleinrichtung 8 für denselben, mittels welcher der Deckel 4 in eine Belüftungsstellung gebracht werden kann. Beim anhand den Figuren 3 bis 7 gezeigten Beispiel handelt es sich bei der Verstelleinrichtung 8 um eine Ausstelleinrichtung 9, welche den Deckel 4 in der Belüftungsstellung derart ausstellt, daß die Hinterkante desselben über die feste Dachfläche 1 schräg nach hinten weisend übersteht und einen Belüftungsspalt zwischen der festen Dachfläche 1 und dem so angeordneten Deckel 4 freigelegt wird. Obgleich nicht näher dargestellt ist, kann der Deckel 4 entsprechend der DE 39 30 755 A1 auch mit seiner Vorderkante unterhalb der Dachebene liegend in der Belüftungsstellung angeordnet werden, so daß beispielsweise im vorderen Bereich der Dachöffnung 2 ein Belüftungsspalt freigelegt wird. Durch die Bezugnahme auf die DE 39 30 755 A1 ist diese vollinhaltlich Gegenstand der Offenbarung der vorliegenden Anmeldung.

Anhand den Figuren 2 und 3 werden nachstehend die wesentlichen Einzelheiten einer bevorzugten Auslegungsform des Himmels 5 und dessen Bewegungskopplung mit der Verstellungeinrichtung 8 bzw. der Aufstelleinrichtung 9 näher beschrieben. In Figur 3 ist das Fahrzeug-Schiebehebedach in der Anordnung gezeigt, wenn der Deckel 4 und der Himmel 5 beide geschlossen sind und kein Lüftungsspalt 10 zwischen dem Deckel 4 und der festen Dachfläche 1 vorhanden ist. Wie bereits erwähnt, umfaßt der Himmel 5, welcher bei der dargestellt bevorzugten Ausführungsform als Schiebehimmel 11 ausgebildet ist, ein vorderes Himmelteil 6 und ein hinteres Himmelteil 7, welche mittels einer Zugfeder 12 derart federbelastet sind, daß die Himmelteile 6 und 7 in Anlageberührung gegeneinander sind. Dem hinteren Himmelteil 7 ist ein Steuerhebel 13, welcher eine im wesentlichen horizontale Erstreckung hat, zugeordnet. Der Steuerhebel 13 ist um eine rahmenfeste Achse 14 drehbar gelagert. Der Steuerhebel 13 hat ein dem hinteren Himmelteil 7 zugeordnetes Hebelende 15, welches einen Zapfen 16 trägt. Das andere Hebelende 17 ragt in Richtung der Bewegungsmechanik des Schiebehebedachs. An einem bei der Belüftungsverstellbewegung des Deckels 4 mitgehenden Teil des Schiebehebedachs, wie einem Hubwinkel 18, ist ein Zapfen 19 vorgesehen, welcher in der in Figur 3 verdeutlichten Schließstellung des Deckels 4 in die Bewegungsbahn im Bereich des Hebelendes 17 des Steuerhebels 13 ragt. Der Hubwinkel 18 ist in den Figuren 3 bis 7 in der Draufsicht nur schematisch verdeutlicht. In der Schließstellung des Deckels 4 ist nach Figur 3 ein Gleitstück 20 am hinteren Himmelteil 7 angebracht, gegen welches der Zapfen 16 am Ende 15 des Steuerhebels 13 zur Berührungsanlage kommen kann.

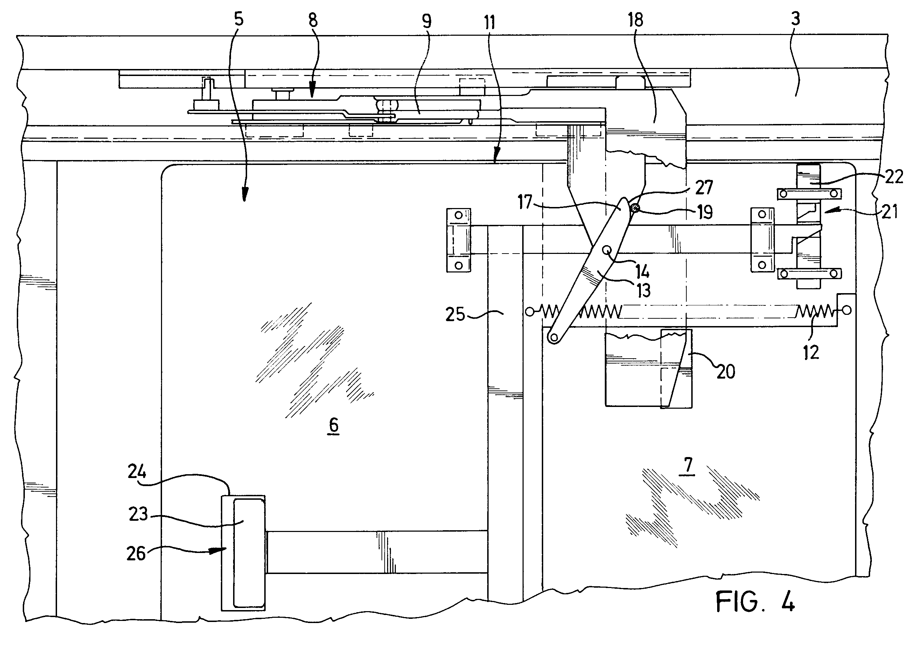

Ferner ist in Figur 3 eine insgesamt mit 21 bezeichnete Verriegelungseinrichtung gezeigt, die ein Verriegelungselement 22 und ein Betätigungselement 23 umfaßt, welches im Bereich einer Griffschale 24 am vorderen Himmelteil 6 angeordnet ist. Da der Himmel 5 bei der bevorzugten Ausführungsform als Schiebehimmel 11 ausgebildet ist, und zweckmäßigerweise einem lichtdurchlässigen Deckel 4 zugeordnet ist, kann mit Hilfe der Griffschale 24 der Schiebehimmel 11 unabhängig von der Stellung des Deckels 4 jederzeit in Längsrichtung verschoben werden, d.h. geöffnet und geschlossen werden. Das mit dem Verriegelungselement 22 zusammenarbeitende Ende ist über ein Hebelgestänge 25 mit dem Betätigungselement 23 verbunden. Das Verriegelungselement 22 ist - wie mit einem Pfeil angedeutet - in Querrichtung zur Längserstreckung des Dachrahmens 3 längsverschieblich, zweckmäßigerweise am vorderen Himmelteil 6 gelagert. Das Betätigungselement 23 bildet eine Handentriegelungseinrichtung 26. Ausgehend von der geschlossenen Stellung des Deckels 4 können die beiden Himmelteile 6 und 7 unter Bildung einer Bewegungsverbundeinheit durch die Zugfeder 12 nach der Entriegelung in die in Figur 4 gezeigte Offenstellung bewegt werden. Da sich in der in Figur 3 gezeigten Stellung der Hubwinkel 18 mit dem dort befindlichen Zapfen 19 in der abgesenkten Stellung befindet, wird der Steuerhebel 13 nicht durch den Zapfen 19 beaufschlagt, so daß die beiden Himmelteile 6 und 7 als Einheit in die Offenstellung beispielsweise durch Handbetätigung verschoben werden können.

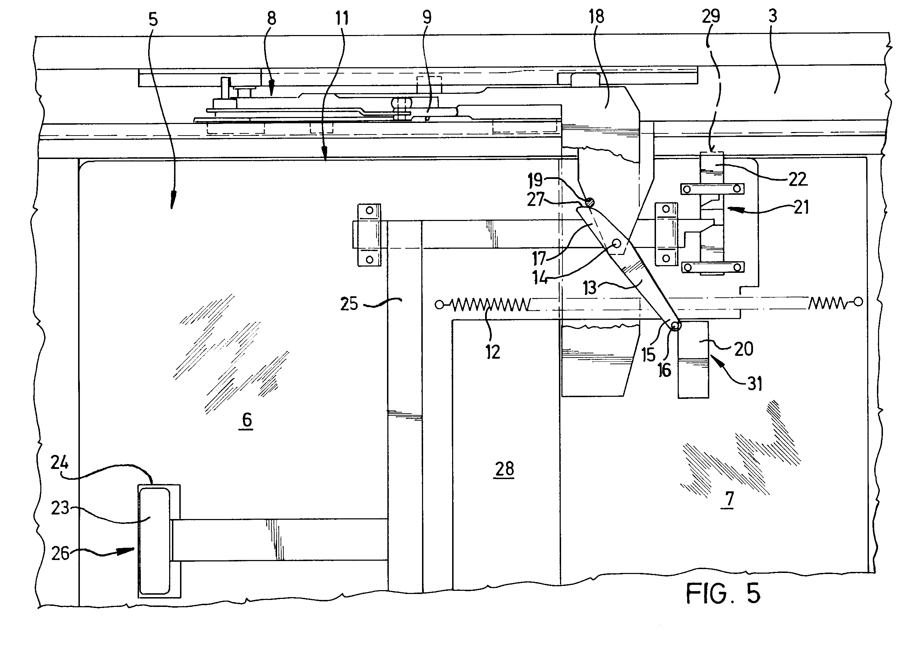

In der in Figur 5 gezeigten Stellung ist der Deckel 4 mit Hilfe der Ausstelleinrichtung 9 ausgestellt, der Himmel 5 ist geschlossen und man erhält einen Lüftungsspalt 10 zwischen der Unterkante des Deckels 4 und der festen Dachfläche 1 im hinteren Bereich des Deckels 4 (siehe Figur 2). Ferner wird der Steuerhebel 13 ausgehend von Figur 3 und 4 über sein Ende 17, welches eine Anlauffläche 27 hat, durch den Zapfen 19 am Hubwinkel 18 beaufschlagt und der Steuerhebel 13 wird bei der Ausstellbewegung des Deckels 4 mitgenommen. Das dem hinteren Himmelteil 7 zugeordnete Gleitstück 20 wird durch den Zapfen 16 am Hebelende 15 beaufschlagt, und das hintere Himmelteil 7 wird entgegen der Wirkung der Zugfeder 12 gegenüber dem vorderen Himmelteil 6 in Richtung nach hinten verschoben, so daß ein im wesentlichen horizontaler Lüftungsspalt 28 zwischen den beiden Himmelteilen 6 und 7 freigelegt wird. Das Gleitstück 20 am hinteren Himmelteil 7 bildet hierbei eine Mitnahmeeinrichtung 31, wenn der Deckel 4 in seine Lüftungsstellung gebracht wird, um die beiden Himmelteile 6, 7 relativ zueinander zu bewegen, indem das vordere Himmelteil 6 mittels der Verriegelungseinrichtung 21 festgestellt und das hintere Himmelteil 7 mit Hilfe des Steuerhebels 13 in Figur 5 in Richtung nach rechts bewegt wird, so daß der Lüftungsspalt 28 freigelegt wird. Wie in Figur 5 gezeigt ist, ist das Verriegelungselement 22 in Querrichtung am vorderen Himmelteil 6 in seine dort gezeigte Verriegelungsstellung verschoben, in welcher das Verriegelungselement 22 in eine Ausnehmung 29, welche am Dachrahmen 3 vorgesehen ist, einrastet. Somit wird zwangsläufig bei der Ausstellbewegung des Deckels 4 in seine Belüftungsstellung der horizontale Lüftungsspalt 28 durch Verschieben des hinteren Himmelteils 7 gegenüber dem festgestellten vorderen Himmelteil 6 freigelegt.

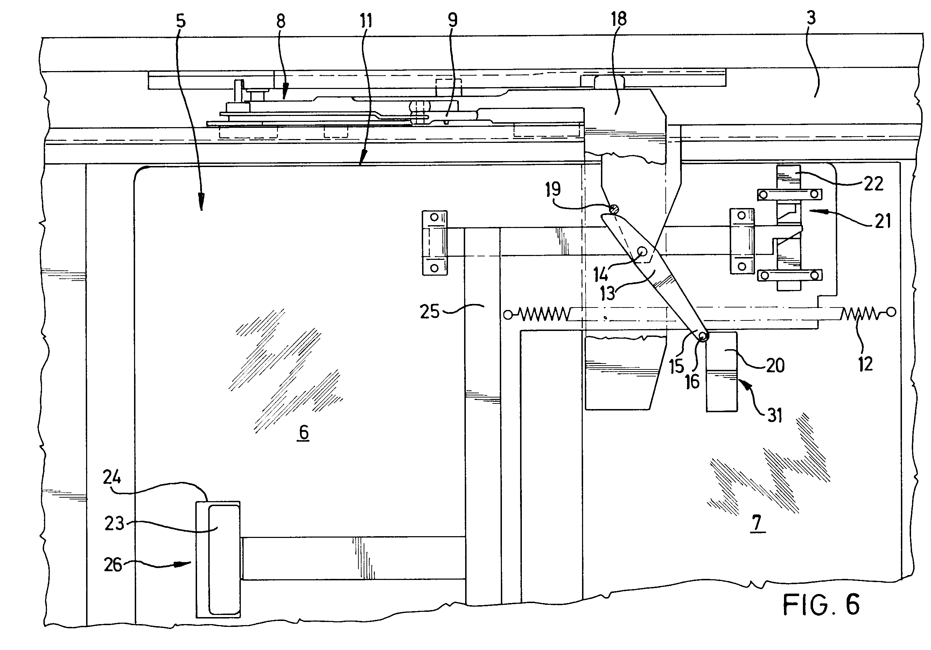

Wenn ausgehend von Figur 5 der Schiebehimmel 11 insgesamt in öffnungsrichtung verfahren werden soll, so wird über die Handentriegelungseinrichtung 26 das Verriegelungselement 22 der lösbaren Verriegelungseinrichtung 21 aus der Ausnehmung 29 ausgerückt, so daß das Verriegelungselement 22 die in Figur 6 gezeigte Lage beispielsweise einnimmt. Somit ist das vordere Himmelteil 6 nicht mehr festgehalten, und durch die Zugfeder 12 wird beim Bewegen des Schiebehimmels 11 in seine Offenstellung zuerst der Lüftungsspalt 28 geschlossen, und dann können die beiden Himmelteile 6 und 7 als Bewegungsverbundeinheit in die jeweils gewünschte Offenstellung verschoben werden.

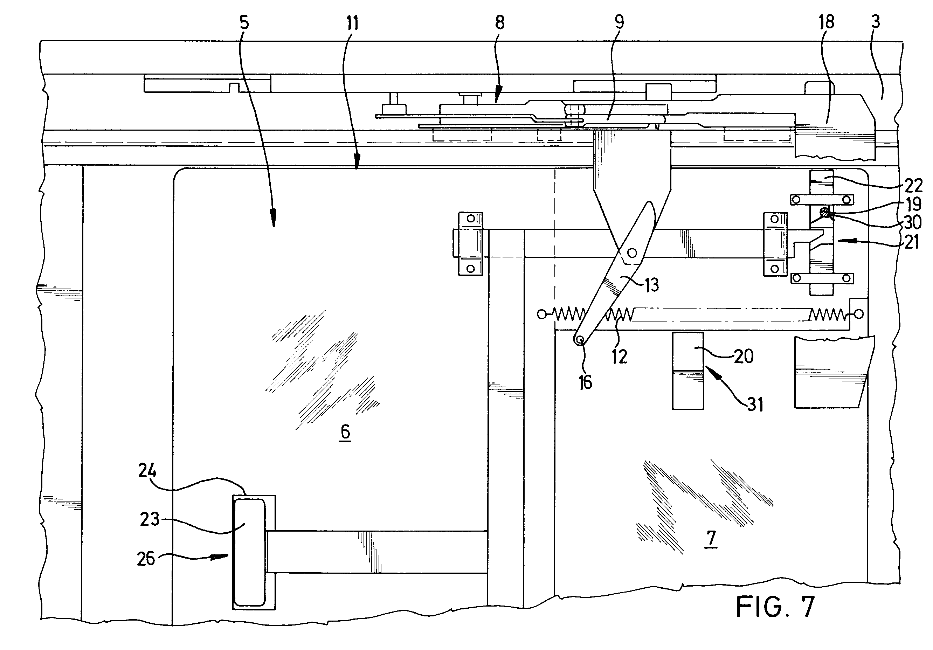

In Figur 7 ist das Schiebehebedach gezeigt, wenn der Deckel 4 abgesenkt und unter die feste Dachfläche 1 verschoben ist, wobei der Himmel 5 ebenfalls in einer Offenstellung gezeigt ist. Bei dieser Verschiebeöffungsbewegung des Deckels 4 kommt der Zapfen 19 am Hubwinkel 18 zur Anlage gegen eine Steuerfläche 30 des Verriegelungselements 22, so daß die Verriegelungseinrichtung 21 automatisch bei dieser öffnungsbewegung des Deckels 4 entriegelt wird und die beiden Teile 6, 7 des Himmels 5 bei der öffungsbewegung des Deckels 4 mitgenommen werden. Der Steuerhebel 13 kommt bei dieser Verfahrbewegung des Deckels 4 mit seinem Zapfen 16 am Ende 15 nicht in den Bewegungsweg des Gleitstücks 20, so daß er keine Relativbewegung der beiden Himmelteile 6 und 7 zueinander bewirkt.

Wenn das Schiebehebedach ausgehend von der Stellung nach Figur 7 wiederum geschlossen wird, so werden die Positionen entsprechend den Figuren 6 bis 3 in umgekehrter Reihenfolge durchlaufen.

Falls der starre Deckel 4 beispielsweise ein Blechdeckel ist und nicht lichtdurchlässig ist, kann beispielsweise die Handentriegelungseinrichtung 26 entfallen, da es dann nämlich ausreicht, daß bei der Belüftungsbewegung des Deckels 4 über den Steuerhebel 13 das hintere Himmelteil 7 von dem vorderen Himmelteil 6, welches mittels der Verriegelungseinrichtung 21 am Dachrahmen 3 festgehalten ist, nach hinten weggeschoben wird, um den Lüftungsspalt 28 freizulegen.

Wenn das Prinzip nach der Erfindung gemäß dem zwangsläufig eines der beiden Himmelteile 6, 7 verschoben wird, beispielsweise bei einem Fahrzeugdach verwirklicht werden soll, bei dem der Deckel im vorderen Bereich unter die feste Dachfläche 1 zur Bildung eines Lüftungsspaltes abgesenkt wird, so ist der Steuerhebel 13 der entsprechenden Verstelleinrichtung 8 zuzuordnen.

Wie die vorstehend angegebenen unterschiedlichen Ausbildungsformen von Fahrzeugdächern zeigen, ist die vorliegende Erfindung nicht auf das anhand der Zeichnung dargestellte bevorzugte Ausführungsbeispiel beschränkt, sondern es sind zahlreiche Abänderungen und Modifikationen möglich, die der Fachmann im Bedarfsfall treffen wird, ohne den Erfindungsgedanken zu verlassen. Insbesondere kann der Zapfen 19, welcher über die Anlauffläche 27 das Ende 17 des Steuerhebels 13 beaufschlagt, auch an einem anderen die Bewegung des Deckels 4 in seine Belüftungsstellung mitmachenden Teil der Bewegungsmechanik des Fahrzeugdaches angebracht sein. Die Erfindung ist daher nicht auf Schiebehebedächer beschränkt, bei denen ein Hubwinkel 18 vorgesehen ist. Auch kann das Gleitstück 20 durch eine andersartig ausgebildete Mitnahmeeinrichtung ersetzt werden.

Wesentlich beim erfindungsgemäßen Schiebehebedach ist die äußerste flach bauende Anordnung für die Zwangsbewegung des hinteren Himmelteils 7 bei festgestellten vorderen Himmelteil 6 zur Freilegung des Lüftungsöffnungsspaltes 28. Neben einem beweglichen Verriegelungselement 22 ist hierzu im wesentlichen nur ein um eine rahmenfeste Achse 14 drehbar gelagerter Steuerhebel 13 als sich bewegendes Teil erforderlich, welcher sich in einer horizontalen Ebene erstreckt, und welcher dünn ausgelegt werden kann. Daher umfaßt die erfindungsgemäße Lösung auch eine äußerste geringe Anzahl von Einzelteilen und insbesondere von beweglichen Einzelteilen. Hierdurch läßt sich das erfindungsgemäße Lösungsprinzip auf konstruktiv äußerst einfache und betriebszuverlässig arbeitende Weise verwirklichen.

### Bezugszeichen

- 1: feste Dachfläche
- 2: Dachöffnung
- 3: Dachrahmen
- 4: Deckel
- 5: Himmel
- 6: vorderes Himmelteil
- 7: hinteres Himmelteil
- 8: Verstelleinrichtung ingesamt
- 9: Ausstelleinrichtung ingesamt
- 10: Lüftungsspalt zwischen Deckel 4 und fester Dachfläche 1
- 11: Schiebehimmel insgesamt
- 12: Zugfeder
- 13: Steuerhebel
- 14: rahmenfeste Achse
- 15: Ende des Steuerhebels 13 welches dem hinteren Himmelteil 7 zugeordnet ist
- 16: Zapfen
- 17: anderes Hebelende
- 18: Hubwinkel
- 19: Zapfen am Hubwinkel
- 20: Gleitstück
- 21: Verriegelungseinrichtung
- 22: Verriegelungselement
- 23: Betätigungselement
- 24: Griffschale
- 25: Hebelgestänge
- 26: Handentriegelungseinrichtung
- 27: Anlauffläche des Steuerhebels 13
- 28: Lüftungsspalt zwischen den beiden Himmelteilen 6, 7
- 29: Ausnehmung
- 30: Steuerfläche am Verriegelungselement 22
- 31: Mitnahmeeinrichtung (wie Gleitstück 20)

## Patentansprüche

1. Fahrzeug-Schiebehebedach mit einem starren Deckel (4) zum Verschließen und wenigstens teilweisen Freilegen einer von einem Dachrahmen (3) begrenzten Dachöffnung (2) in einer festen Dachfläche (1), mit einer Verstelleinrichtung (8,9) für die Belüftungsstellung des Deckels (4) und mit einem wenigstens in Fahrzeuglängsrichtung ein vorderes und ein hinteres Himmelteil (6, 7) aufweisenden Himmel (5), welcher unabhängig von der Deckelstellung bewegbar ist, dadurch **gekennzeichnet,** daß bei der Belüftungsstellbewegung des Deckels (4) zwischen den Himmelteilen (6,7) ein horizontaler Lüftungsspalt (28) freilegbar ist.

2. Fahrzeug-Schiebehebedach nach Anspruch 1, dadurch **gekennzeichnet,** daß das hintere Himmelteil (7) in Anlage gegen das vordere Himmelteil (6) federbelastet (12), und daß ein rahmenfest drehbar gelagerter Steuerhebel (13) derart angeordnet ist, daß er bei der Belüftungsstellbewegung des Deckels (4) beaufschlagt wird und das hintere Himmelteil (7) vom vorderen Himmelteil (6) entgegen der Federbelastung zum Freigeben des Lüftungsspalts (28) in längsrichtung wegbewegt.

3. Fahrzeug-Schiebehebedach nach Anspruch 2, dadurch **gekennzeichnet**, daß sich der Steuerhebel (13) im wesentlichen horizontal erstreckt.

4. Fahrzeug-Schiebehebedach nach Anspruch 2 oder 3, dadurch **gekennzeichnet**, daß ein Ende (17) des Steuerhebels (13) bei der Belüftungsstellbewegung beaufschlagt wird, während sein anderes Ende (15) das hintere Himmelteil (7) mitnimmt.

5. Fahrzeug-Schiebehebedach nach einem der Ansprüche 1 bis 4, dadurch **gekennzeichnet,** daß das vordere Himmelteil (6) über eine lösbare Verriegelungseinrichtung (21) feststellbar ist.

6. Fahrzeug-Schiebehebedach nach Anspruch 5, dadurch **gekennzeichnet**, daß die Verriegelungseinrichtung (21) zum von der Deckelstellung unabhängigen Zurückschieben des Himmels (5) mittels einer Handentriegelungseinrichtung (26) von Hand entriegelbar ist.

7. Fahrzeug-Schiebehebedach nach Anspruch 6, dadurch **gekennzeichnet,** daß zur Entriegelung ein Betätigungselement (23) im vorderen Himmelteil (6),vorzugsweise im Bereich einer Griffschale (24) des vorderen Himmelteils (6), angeordnet ist.

8. Fahrzeug-Schiebehebedach nach einem der Ansprüche 5 bis 7, dadurch **gekennzeichnet**, daß bei der Längsverschiebebewegung des Deckels (4) die Verriegelungseinrichtung (21) automatisch entriegelt wird.

9. Fahrzeug-Schiebehebedach nach einem der Ansprüche 5 bis 8, dadurch **gekennzeichnet**, daß die Verriegelungseinrichtung (21) ein relativ zum vorderen Himmelteil (6) längsverschiebbares Verriegelungselement (22) aufweist, das in eine Ausnehmung (29) am Dachrahmen (3) einrastet.

10. Fahrzeug-Schiebehebedach nach einem der vorangehenden Ansprüche, dadurch **gekennzeichnet,** daß bei einer Verstelleinrichtung (8,9) mit einem Hubwinkel (18) an demselben ein Zapfen (19) angebracht ist, welcher in die Bewegungsbahn des Steuerhebels (13) zur Beaufschlagung desselben ragt.

11. Fahrzeug-Schiebehebedach nach einem der Ansprüche 4 bis 10, dadurch **gekennzeichnet,** daß das mit dem hinteren Himmelteil (7) zusammenarbeitende Steuerhebelende (15) einen Zapfen (16) trägt, welcher bei der Beaufschlagung des anderen Steuerhebelendes (17) im Zusammenwirken mit der Verstelleinrichtung (8, 9) mit einer Mitnahmeeinrichtung (31) am hinteren Himmelteil (7) zusammenarbeitet.

12. Fahrzeug-Schiebehebedach nach Anspruch 11, dadurch **gekennzeichnet,** daß die Mitnahmeeinrichtung (31) am hinteren Himmelteil (7) von einem Gleitstück (20) gebildet wird und derart angebracht ist, daß sie in die Bewegungsbahn des Steuerhebels (13) nur ragt, wenn das andere Steuerhebelende (17) durch die Verstelleinrichtung (8,9) beaufschlagt ist.
